# EUROPÄISCHE PATENTSCHRIFT

(11) **EP 1 586 436 B1**
(45) Veröffentlichungstag und Bekanntmachung des Hinweises auf die Patenterteilung: **15.12.2010**
(21) Anmeldenummer: 04009100.1
(22) Anmeldetag: 16.04.2004
(51) Int. Cl.: B29C 51/22, B29C 65/00, B65B 9/02, A61J 3/07

(54) **Verfahren zur Herstellung von Formkörpern aus Plastomeren**
Process for manufacturing moulded plastomeric parts
Procédé de fabrication de pièces moulées de plastomères

(43) Veröffentlichungstag der Anmeldung: 19.10.2005
(73) Patentinhaber: Swiss Caps Rechte und Lizenzen AG, 9533 Kirchberg (CH)
(72) Erfinder: Brocker, Erich (Dr.), 9533 Kirchberg (CH); Maier, Hans-Jürgen (Dr.), 8636 Wald-Oberholz (CH); Engel, Dieter Wolfgang, 9524 Zuzwil (CH)
(74) Vertreter: Wenger, René

(56) Entgegenhaltungen:
- EP-A- 0 117 836
- EP-A- 1 035 188
- WO-A-01/37817
- WO-A-01/66082
- WO-A-97/35537
- DE-A- 10 130 781
- HEINZ HASCHKE, IVAN TOMKA UND ANDREAS KEILBACH: "Systematische Untersuchungen zur biologischen Abbaubarkait von Verpackungsmaterial, 3. Mitt. Neue Polyvinylalkohol-Stärke-Acetal-Folien" MONATSHEFTE FUER CHEMIE., Bd. 129, 1998, Seiten 487-507, XP002296691 ATSPRINGER VERLAG, VIENNA

## Beschreibung

Die vorliegende Erfindung betrifft ein Verfahren zur Herstellung von Formkörpern aus Plastomeren sowie die Verwendung von Plastomeren zu diesem Zweck und die mit diesem Verfahren hergestellten Formkörper.

Flüssiges, pulverförmiges, pastöses bzw. als Granulat oder Suspension vorliegendes Packungsgut (Füllgut) wird in der Regel so verpackt, dass jede Verpackungseinheit einer genau dosierten Packungsgut-Dosis entspricht. Dies macht es überflüssig, das Füllgut bei seiner Anwendung abzuwiegen oder auf andere Art abzumessen. Als Packungseinheiten kommen Beutel, Kissen (Pouches) oder Kapseln in Frage. Vorzugsweise wird als Verpackungsmaterial (Hüllgut) ein Material verwendet, welches sich bei der jeweiligen Anwendung auflöst und dabei das Packungsgut freigibt. Herkömmliche Hüllgutmaterialien sind Gelatine oder thermoplastische Stärke, welche sich allerdings nur in warmem oder heißem Wasser lösen.

Kaltwasserlösliche Hüllgüter sind zwar bekannt, beispielsweise Polyvinylalkohol (PVA), haben aber den Nachteil, dass diese Materialien mit den herkömmlichen Verfahren nicht zufriedenstellend beziehungsweise gar nicht zu verschlossenen Hüllgütern verarbeitet werden können.

Dies trifft insbesondere auf das Rotary-Die-Verfahren zu, welches das herkömmlichste Verfahren zur Herstellung von Weichkapseln darstellt. Das Rotary-Die-Verfahren und die hierfür erforderlichen Vorrichtungen sind bekannt (vgl. z.B. Fahrig/Hofer (Hrsg.), Die Kapsel, Wissenschaftliche Verlagsgesellschaft, Stuttgart 1983, S. 70 f.f.). In seiner herkömmlichen Ausgestaltung umfasst eine Rotary-Die-Vorrichtung zwei Formwalzen, deren Oberflächen jeweils mindestens ein Film aus dem verwendeten Hüllmaterial (in der Regel Gelatine, thermoplastische Stärke oder Carrageenan) zugeführt wird. Die Formwalzen weisen Vertiefungen (Näpfe) zur Aufnahme des Hüllgutfilms und zur Formung des Formkörpers sowie zwischen diesen Vertiefungen befindliche Stege auf. Mittels eines Füllkeils wird das Füllgut zwischen die Hüllgutfilme eingebracht. Die Hüllgutfilme werden unter Erwärmung aufgeschmolzen, aufgrund der gegensinnigen Drehbewegung der Formwalzen in der Region der Stege in innigen Kontakt miteinander gebracht und so miteinander verschweisst. Anschliessend werden die Formkörper aus den Hüllgutmaterialfilmen ausgestanzt. Bei der für das Rotary-Die-Verfahren typischen Stirnnaht sind die Halbschälen stumpf, d.h. mit einem Schenkelwinkel von 180° an den durch die Banddicke gegebenen Sfirnflächen miteinander verbunden. Die Stirnnaht bildet quasi als virtuelle Spiegelebene die Flächenkontur des Kapselkörpers ab, entlang der sich oberflächenminimiert die Hüllenhälften aufbauen.

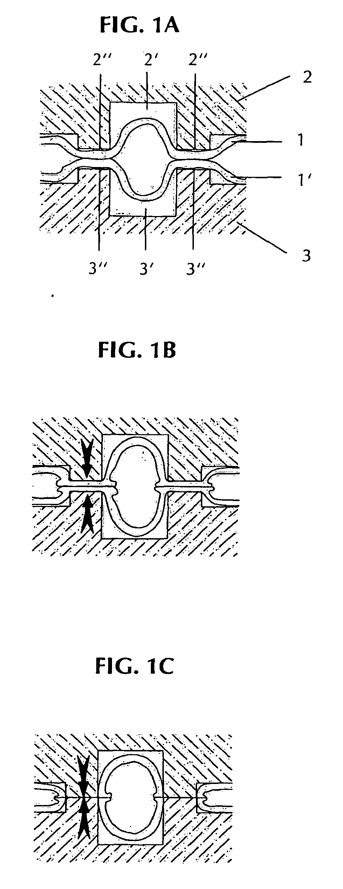

Der Vorgang des Verschweißens im Rotary-Die-Verfahren ist in Fig. 1 A-C gezeigt. In Fig. 1A sind die beiden Filme aus Hüllgutmaterial 1 und 1' zu sehen. In den Vertiefungen 2' und 3' der Formwalzen 2 und 3 ist der gefüllte Formkörper F ausgebildet. Die auf den Stegen 2" und 3" der Formwalzen 2 und 3 befindlichen Filme aus Hüllgutmaterial stehen miteinander in Kontakt und sind unter den im Verfahren vorliegenden Temperaturen zumindest teilweise aufgeschmolzen. Legt man nun wie in Fig. 1B gezeigt Druck an die Stege 2" und 3" an, kommt es dort zu einem Verschweißen der Filme 1 und 1' und bei Fortführung des Prozesses wie in Fig. 1C gezeigt letztendlich zu einem Ausstanzen der Formkörper. Mittels Rotary-Die-Verfahren können wohlgeformte Körper mit einer Symmetrieebene hergestellt werden; typische Formen sind Ellipsoide und Kugel.

Die Besonderheiten des Rotary-Die-Verfahrens haben zur Folge, dass ein als Hüllgut verwendbares Material verschiedene Bedingungen erfüllen muss, die insbesondere von Gelatine in hervorragendem Masse erfüllt werden. Vor allem weist Gelatine im Gelzustand die für das Rotary-Die-Verfahren erforderliche Elastizität und hohe Bruchdehnung auf. Auch thermoplastische Stärke kann im Rotary-Die-Verfahren als Hüllgut verarbeitet werden (vgl. WO 01/37817). Aufgrund der BSE-Problematik wird aber vermehrt nach Ersatz für Gelatine als Hüllmaterial gesucht.

Plastomere wie PVA können hingegen mit dem herkömmlichen Rotary-Die-Verfahren nicht oder nur sehr eingeschränkt verarbeitet werden. Der Grund dafür ist, dass die Schmelz-Temperatur (Liquidus) von Thermoplasten vor allem bei teilkristallinen Systemen meist weit über der Erstarrungstemperatur (Solidus) liegt. Rheologie und Phasenverhalten von Plastomeren sind thermisch charakterisiert durch eine untere Temperatur, unterhalb der ein Stoff einphasig fest voriiegt. Diese Temperatur wird als Solidus-Temperatur bezeichnet. Die obere Temperaturgrenze, auch Liquidus-Schmeiztemperatur genannt, ist die Temperatur oberhalb welcher der Stoff einphasig flüssig vorliegt. Zwischen diesen Temperaturen enthält eine Polymerschmelze sowohl feste wie auch flüssige Komponenten. Hochkonzentrierte Polymerlösungen und auch deren Schmelzen zeichnen sich grundsätzlich dadurch aus, dass die einzelnen Ketten nicht miteinander verbunden sind und unterscheiden sich hierdurch grundlegend zu Gelen, bei denen sich durch Wasserstoffbrücken (Gelatine) oder durch chemische Bindungen (Gummi) ein echtes Riesenmolekül bildet, das in hochkonzentrierten aber auch verdünnten Lösungen (z.B. Gelatinegehalt in Wasser bei 20 °C 6,6 %) noch intakt bleibt.

Im Rotary-Die-Prozess erfolgt der Wärmeübergang auf die kontinuierlich zugeführten Bänder typischerweise ganz oder teilweise mittels Füllkeil, der auf Verarbeitungstemperatur aufgeheizt ist. Bei der konventionellen, rein isotherm gelenkten Prozessführung werden Bänder aus thermoplastischen Polymeren, die in Kontakt mit der Segmentheizung kommen, schnell plastisch und klebrig und verlieren an Zug- und Formfestigkeit, bevor die erforderliche Verarbeitungstemperatur erreicht ist. So ist in der WO 01/66082 zwar die prinzipielle Möglichkeit der Herstellung von Weichkapseln mit einer Hülle aus einem Polyvinylalkoholderivat mittels Rotary-Die-Verfahren beschrieben. Aus den vorstehend genannten Gründen ist die in der WO 01/66082 beschriebene Herstellung mittels herkömmlicher Rotary-Die-Technik jedoch nur unter erheblichem Aufwand und Inkaufnahme verschiedener Nachteile durchführbar. DE-A-10130781 offenbart ein Material mit einen Cross-over-Punkt zwische. G' und G" innerhalb dem Bereich von 0,001 und 100.000 s⁻¹ liegt.

Versuche der Verarbeitung von Plastomeren zu Füllgütern führten zu unbefriedigenden Ergebnissen. In der WO 97/35537 wird als thermoplastisches Polymer ein nicht näher charakterisiertes Polyvinylalkohol verwendet. Die auf den Oberflächen der Formwalzen der Rotary-Die-Vorrichtung befindlichen Filme werden nicht aufgeschmolzen und deshalb nicht miteinander verschweißt. Vielmehr wird ein Lösungsmittel auf die Oberfläche der Filme gegeben und das Polymer dabei partiell angelöst. Es entsteht primär eine lösungsmittelreiche Hilfsphase, die quasi als Klebstoff die Bänder miteinander verklebt. In einem nachfolgenden Schritt wird durch Anwendung von Wärme und Temperatur das Lösungsmittel wieder entfernt. Die derart hergestellten Kapseln sind primär miteinander verklebt und zeigen deshalb keine mit Gelatinekapseln vergleichbare Stabilität. Verklebte Verbindungen sind verschweißten Verbindungen im Hinblick auf die Stabilität und Festigkeit grundsätzlich unterlegen.

Möglich ist die Durchführung eines Flachsiegelungsprozesses, bei dem, um eine sichere und dichte Abpackung des Packungsgutes zu erreichen, eine um die eigentlich Kissenförmige Verpackung (in der englischen Fachliteratur als "Pouch" bezeichnet) umlaufende, relativ breite, in der Regel ca. 3-5mm, sich außerhalb der "Kapsel" und damit entfernt vom Kontaktbereich mit dem Füllgut befindliche, Boden- und Deckelfolie miteinander verbindende ("extrakapsuläre") Siegelnaht - ein sogenannter "Saturnring" - als Verschlussnaht hergestellt wird. Für derartige breite Siegelnähte reichen oft auch Verklebungsvorgänge, wenn die Packungen keiner hohen mechanischen Beanspruchung ausgesetzt sind oder die Siegelnahtfestigkeit nicht von allzu langer Haltbarkeit sein muss. Derartige Siegelnähte sind aber nicht nur unschön und neigen dazu scharfkantig zu sein, sie behindern auch das freie Gleiten und damit die Schüttbarkeit solcher Packungen. Abgesehen davon ist ein solcher Siegelprozess relativ zeitraubend und damit unwirtschaftlich.

Es war die Aufgabe der vorliegenden Erfindung, Formkörper und ein verbessertes Verfahren zu deren Herstellung bereitzustellen, deren Hüllgut als wesentliche Komponente ein, vorzugsweise kaltwasserlösliches, Plastomer (d.h. ein Material ohne Gelbildungseigenschaften) aufweist.

Überraschend wurde gemäss der vorliegenden Erfindung gefunden, dass die vorstehende Aufgabe gelöst wird durch ein Verfahren zur Herstellung eines Formkörpers, umfassend ein vollständig von Hüllmaterial umschlossenes Füllgut, mit den Schritten:
a) Bereitstellung von mindestens 2 Filmen eines Hüllmaterials enthaltend mindestens ein thermoplastisches Polymer, wobei das Material strukturviskos ist und einen Cross-over-Punkt zwischen dem Speichermodul G' und dem Verlustmodul G" in einem Frequenzspektrum aufweist, gemessen oberhalb von der Glastemperatur und in einem Bereich 1 bis 100°C unterhalb der Liquidus-Schmelztemperatur des Materials;
b) Verschweißen der unter a) erhaltenen Filme bei einer Temperatur unterhalb der Liquidus-Schmelztemperatur des Hüllmaterials unter erhöhter mechanischer Belastung.

Die vorliegende Erfindung betrifft auch die Zusammensetzung nach Anspruch 15, Formkörper nach Anspruch 16 und eine Verwendung nach Anspruch 17.

Es wurde überraschend gefunden, dass man Filme aus bestimmtem thermoplastischen Material sogar unterhalb der Liquidus-Schmelztemperatur miteinander stumpf verschweißen und nicht nur verkleben kann, indem man die Filme einer erhöhten mechanischen Belastung aussetzt. Erfindungsgemäss soll unter einer erhöhten mechanischen Belastung eine derartige Belastung verstanden werden, welche die bei einem herkömmlichen Rotary-Die-Verfahren eingesetzte mechanische Belastung übersteigt. Die mechanische Belastung kann beispielsweise aus einem erhöhten Druck oder einer erhöhten Scherung an den Formwalzenstegen einer Rotary-Die-Vorrichtung bestehen.

Der apparente Druck auf die Stege der Formwalzen einer Rotary-Die-Vorrichtung ergibt sich aus der Kraft, die auf die Fläche der Walzenstege ausgeübt wird. Der Druck ist als Prozessparameter variabel durch eine Messspindel einstellbar. Die relevante Stegfläche ergibt sich ihrerseits aus der Stegbreite sowie aus Anordnung und Grösse der Näpfe respektive der daraus ableitbaren kraftaufnehmenden Fläche der Stege entlang der Walzenlängsachse. Die relevante Stegfläche ist für ein Walzentyp festgelegt; verschiedene Walzentypen haben unterschiedlich relevante Stegflächen.

Die Verkapselung von Gelatinemischungen, die typischerweise 30-50 %Trockengelatine, 10-30% Weichmacher und Wasser q.s. enthalten, kann bei einer wirksamen Kraft von 20 - 60 N auf die Stege entlang der Walzenlängsachse durchgeführt werden. Für eine Formwalze analog Typ 1925PL mit Abmessungen von 250 mm Länge und einem Durchmesser von 150 mm enthaltend 14 x 36 Näpfe mit 7.5 minims Nutzen ergeben sich für typische Banddicken von 0.7 mm bei einer Verarbeitungstemperatur von 42 °C rechnerische Drucke von ca. 7,5 - 22,5 bar auf den Stegen. In der Praxis wird der Druck minimiert, um Abnutzung und Verschleiss der Formwalzen gering zu halten. Die bei einer Drehzahl von 2.5 rpm entwickelte, mechanische Leistung errechnet sich für eine gemittelte Nahtzeile entlang der Walzenlängsachse aus obigen Angaben zu 6,8 - 20,5 W; dabei wurde eine Hubstrecke von zwei Bandlagen für die Berechnung zugrunde gelegt.

Die erfindungsgemässe Verarbeitung von thermoplastischen Stoffen erfolgt dagegen bei wesentlich höheren Drucken. Erfindungsgemäss ist in der Regel ein Druck anzulegen, welcher den Druck bei einem herkömmlichen Rotary-Die-Verfahren um den Faktor 10 übersteigt. Erfindungsgemäss bevorzugt sind hierbei Drücke, welche den Druck bei einem herkömmlichen Rotary-Die-Verfahren um den Faktor 15 bis 40 übersteigen, d.h. etwa im Druckbereich von 225 bis 600 bar liegen.

Im Gegensatz zu dem in der WO 97/35537 beschriebenen Verfahren wird erfindungsgemäss kein Lösungsmittel auf die Filmoberflächen gegeben. Beim erfindungsgemässen Verfahren kommt es nicht zu einem bloßen Verkleben der Hüllgutfilme, sondern zu einem Verschweißen unter Erhalt einer stumpfen Naht, analog zum herkömmlichen Rotary-Die-Verfahren.

Es hat sich gezeigt, dass thermoplastisches polymeres Material unter diesen Bedingungen miteinander verschweißt werden kann, wenn es folgende Eigenschaften aufweist:
- Es muss strukturviskos sein, d.h. die Viskosität des Materials nimmt unter mechanischer Belastung ab.
- Das Material muss einen Cross-over-Punkt zwischen dem Speichermodul G' und dem Verlustmodul G" in einem Frequenzspektrum aufweisen, welcher in einem Bereich von 1 bis 100°C unterhalb der Liquidus-Schmelztemperatur des Materials liegt.

Unter erhöhter mechanischer Belastung zeigt ein strukturviskoses Material ein besseres Fliessverhalten. Dieser Effekt führt im Rotary-Die-Verfahren dazu, dass zwei Filme aus einem derartigen Material unter erhöhter mechanischer Belastung, jedoch unterhalb der Liquidus-Schmelztemperatur des Materials, derart miteinander verschweißt werden können, als ob sie vorher aufgeschmolzen worden wären. Strukturviskosität ist ein von zahlreichen Polymer her bekanntes Verhalten. Es beschreibt den Effekt, dass mit steigender mechanischer Belastung die Viskosität des Stoffes abnimmt, dieser also eine Schmelzindexfunktion (MFI) aufweist, die umgekehrt proportional vom Druck abhängig ist. Strukturviskoses Verhalten kann auf einfache Weise beispielsweise in Scher- oder Dehnrheometern bestimmt werden. Scherrheometer sind Kegel/Platten- oder Sandwichrheometer, während Dehnrheometer entweder mit konventionellen Klemmen (wie Zugmaschinen) oder rotierenden Klemmen ausgerüstet sind, welche in entgegengesetzte Richtung rotieren und das Material aus einer zentralen Messzone herausbefördern. Vorzugsweise wird jedoch ein Hochdruck-Kapillarrheometer verwendet. Das Material wird in einem beheizten Zylinder aufgeschmolzen und dann mit Hilfe eines Stempels entweder mit konstanter Kolbengeschwindigkeit durch eine Mess-Kapillare gedrückt - in diesem Fall wird der Druckverlust infolge Scherung entlang der Kapillare über eine definierte Messstrecke rheologisch ausgewertet [Δp=f(γ°)] - oder, bei vorgegebenem Druck bzw. der wirksamen Schubspannung τ, die Schergeschwindigkeit γ° aufgeprägt [γ°=f(Δp)]. Die Schergeschwindigkeit γ° ist definiert als γ°= Δγ/Δt. Bei Anwendung der Hagen-Poiseuille-Gleichung ergibt sich für laminar durchströmte Kapillaren zwischen dem messbaren Druckabfall Δp und der Viskosität η ein Zusammenhang, der temperaturbezogen in p-η-Diagrammen als isotherme Kurvenschar dargestellt wird bzw. ein aus stationären Druckwerten als Funktion der vorgegebenen Scherrate γ° als Viskositätskurve bezeichnete isotherme γ°-η Diagramm. In diesem Diagramm ist die Scherviskosität η in Pa·s gegen die Schergeschwindigkeit γ° in s⁻¹ aufgetragen. Beide Funktionen eignen sich gleichermaßen zur Ableitung von Strömungs-und Spannungsverhältnissen in den schmelzeführenden Bereichen der Rotary-Die-Vorrichtung.

Es wurde gefunden, dass thermoplastischen Materialien, die sich in ihrem rheologischen Verhalten in Viskositätskurven η/γ° oder η)/τ durch Kennlinien mit negativer Steigung zu erkennen geben, für das erfindungsgemässe Verfahren geeignet sind - wohingegen deren Analoge mit Steigung Null (newtonische Flüssigkeiten) oder mit positiver Steigung (Dilatanten) sich als ungeeignet erwiesen haben.

Erfindungsgemäss sind insbesondere derartige Substanzen besonders geeignet, bei denen im Bereich der Kristallitschmelztemperatur kleine Änderungen der Schubspannung τ bzw. der Schergeschwindigkeit γ° große Veränderungen der Viskosität η bewirken. Mit anderen Worten weisen derartige Substanzen genügend steile Viskositätskurven η/γ° oder η/τ auf. Hierdurch wird eine Prozessführung möglich, bei welcher die Viskosität in kürzesten Zeitintervallen sehr stark verändert werden kann.

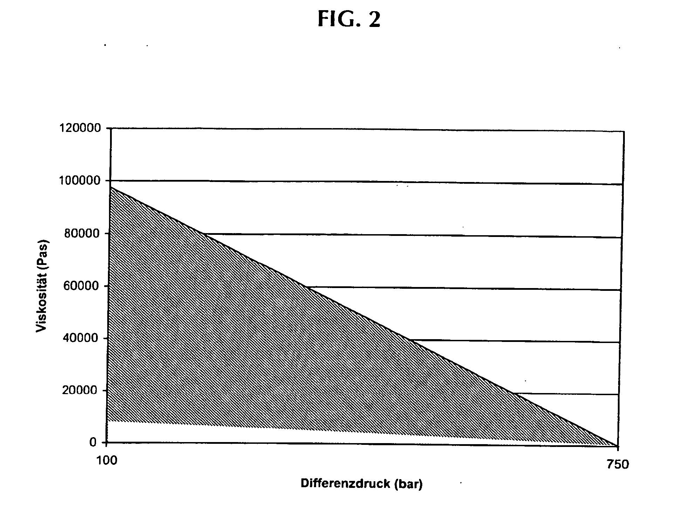

Gemäss der vorliegenden Erfindung sind vorzugsweise thermoplastische Polymere verwendbar, deren Viskositätskurven bei einer Temperatur unterhalb der Liquidus-Schmeiztemperatur im Bereich von 100 bis 750 bar eine Steigung Δη/ΔP von mindestens -10 Pas/bar und von maximal -150 Pas/bar aufweisen. Mit anderen Worten sind derartige thermoplastische Polymere geeignet, deren Viskositätskurve sich bei einer Temperatur unterhalb der Liquidus-Schmelztemperatur, vorzugsweise bei einer Temperatur im Bereich von 1 - 50 °C unterhalb der Liquidus-Schmelztemperatur, zumindest teilweise in dem in Fig. 2 gezeigten schraffierten Bereich befindet.

Erfindungsgemäss besonders bevorzugt sind thermoplastische Polymere verwendbar, deren Viskositätskurven bei einer Temperatur unterhalb der Liquidus-Schmeiztemperatur im Bereich von 100 bis 750 bar eine Steigung Δη/ΔP von mindestens -30 Pas/bar und von maximal -100 Pas/bar aufweisen. Vorzugsweise erfüllen die Polymere diese Eigenschaft bei einer Temperatur im Bereich von 50 - 180°C.

Unter diesen Voraussetzungen ist es möglich, durch ausreichende mechanische Belastung einen Viskositätswert des Polymers zu erreichen, der für die Verarbeitung im Rotary-Die-Verfahren geeignet ist. Dieser Wert wird gemäss der vorliegenden Erfindung als förderliche Schmelzviskosität η⁺ bezeichnet.

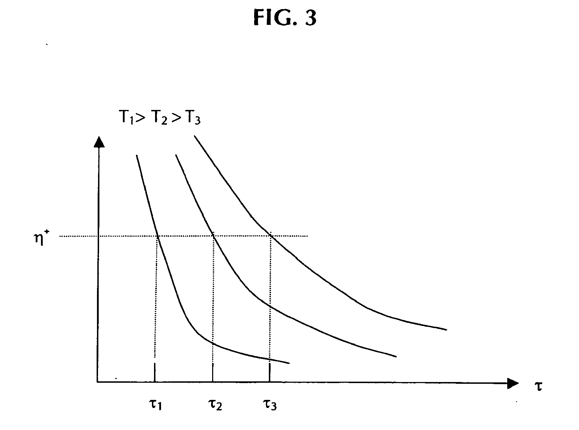

In Fig. 3 ist noch einmal der Gedanke der vorliegenden Erfindung erläutert. Für die Verarbeitung eines beliebigen polymeren Materials im Rotary-Die-Verfahren muss für dieses Polymer die förderliche Schmelzviskosität η⁺ erreicht werden. Bei einer hohen Temperatur T1 wird dieser Wert bereits bei relativ geringer Schubspannung τ1 erreicht.

Bei derart hohen Temperaturen kommt es jedoch bei vielen Materialien zu den eingangs genannten Problemen und damit zu sehr limitierter beziehungsweise nicht möglicher Verarbeitbarkeit im Rotary-Die-Verfahren. Andererseits kann bei strukturviskosen Polymeren die förderliche Schmelzviskosität η⁺ bei deutlich niedrigeren Temperaturen T3 erreicht werden, wenn man eine entsprechend höhere Schubspannung τ3 anlegt.

Erfindungsgemäss ist die Verarbeitung der vorstehenden Materialien im Rotary-Die-Verfahren bevorzugt, da dieses Verfahren besondere Vorteile bietet. Es ist aber natürlich grundsätzlich möglich, die vorstehenden Materialien auch in anderen Formkörper-Herstellungsverfahren unter den erfindungsgemässen Bedingungen - Arbeiten unterhalb des Ereichungspunktes bei erhöhter mechanischer Belastung - zu verarbeiten.

Ein weiteres wesentliches Kriterium gemäss der vorliegenden Erfindung ist, dass das thermoplastische Polymer einen Cross-over-Punkt zwischen dem Speichermodul G' und dem Verlustmodul G" in einem Frequenzspektrum von 0,001 bis 100000 s⁻¹ aufweist, welcher in einem Bereich von 1 bis 100°C unterhalb der Liquidus-Schmelztemperatur des Materials liegt. Vorzugsweise liegt dieser Cross-over-Punkt hierbei in einem Bereich von 1 bis 75°C, besonders bevorzugt von 1 bis 50°C unterhalb der Liquidus-Schmelztemperatur des Materials.

Der Speichermodul G' und der Verlustmodul G" sind bekanntlich Indikatoren des rheologischen Verhaltens eines Materials. Sie können auf einfache und bekannte Weise in Oszillationstests bestimmt werden, beispielsweise mit dem Perkin Elmer Diamond DMA-Gerät oder dem Stresstech-Rheometer oder dem PAAR MVR300. Hierbei wird das Material bei einer bestimmten Temperatur einer oszillativen Belastung ausgesetzt, welche über einen gewissen Frequenzbereich variiert wird. Das Material kann die eingebrachte Energie entweder speichern oder durch Bewegung abgeben. Flüssige Materialien haben einen kleineren Speichermodul G' und einen größeren Verlustmodul G", d.h. G">G'. Mit anderen Worten verlieren flüssige Materialien die eingebrachte Energie eher als dass sie dieselbe speichern. Bei festen Materialien sind die Verhältnisse genau umgekehrt. Beim Übergang vom flüssigen zum festen Verhalten steigt der Speichermodul G' und sinkt der Verlustmodul G". Am Cross-over-Punkt (G'=G") schneiden sich die Kurven für G' und G".überwiegt.

Gemäss der vorliegenden Erfindung wird somit vom Material gefordert, dass es bei angelegten Frequenzen von 0,001 bis 100000 s⁻¹ in einem Bereich von 1 bis 100°C unterhalb der Liquidus-Schmelztemperatur einen Übergang von festem zu flüssigem Verhalten mit entsprechend abnehmender Viskosität zeigt.

Dem Fachmann sind Materialien mit den vorstehend genannten Eigenschaften bekannt, oder er kann die Eigenschaften - Ausmaß der Strukturviskosität und Lage des Cross-over-Punkt auf bekannte und vorstehend beschriebene Weise bestimmen. Beispielsweise weisen teilkristalline thermoplastische Polymere in der Regel die entsprechenden Eigenschaften auf. Dies gilt insbesondere auch für mit rheologischen Additiven weichgemachte Polymere (Polymere plus Additive, die zumindest teilweise mit dem Polymer mischbar sind) oder Polymermischungen aus 2 Komponenten stark verschiedener Kettenlänge.

Es ist aber auch möglich, ein Material so zu verändern, dass es die erfindungsgemäss geforderten Eigenschaften aufweist. So kann die Strukturviskosität eines Materials bekanntlich durch Zugabe von Rheologiehilfsmitteln beeinflusst werden. Dies ist beispielsweise in der DD-A1-277 690 und in der WO 03/014233 beschrieben, auf deren diesbezüglichen Inhalt ausdrücklich Bezug genommen wird. In der DD-A1-277 690 wird gelehrt, dass die Strukturviskosität eines Polymers durch Wahl der Monomeranteile eingestellt werden kann. In der WO 03/014233 werden Rheologiehilfsmittel auf der Basis eines Harnstoffderivats beschrieben.

Als derartige Mittel kommen aber auch Weichmacher wie Glycerin, Glykole wie Ethylenglykol oder Propylenglykol, oder Polymere von Glycerin oder Glykolen, sowie Wasser oder Gemische derselben in Frage. Grundsätzlich in Frage kommen Polyethylenglycol, Polyvinylalkohol, Polyvinylacetat, Polyvinylmethylether, Polyacrylsäure und Salze davon, Polyvinylacrylsäure, Polyacrylamide, Ethylenoxid-Polymeren, Polyessigsäure, Alkali- und Erdalkalimetal-Fettsäuresalze wie Magnesiumstearat, Aluminiumstearat, Lecithin, Emulgatoren, anionische, kationische und neutrale Tenside (wie Sorbitanester (Span), ethoxylierte Sorbitanfettsäureester, (Polysorbate), Glycerolester, Polyglycerolester, Fettalkoholethoxylate, Fettsäureester von Polyglycol, Glycerolpolyethylenglycolfettsäureester, Fettsäureethoxylat, Fettsäureester, Nonylphenolethoxylate, ethoxylierte synthetische Fettalkohole, alkoxylierte synthetische Fettsäurealcohole, natrium-N-methyl-N-oleyltaurat, phosphorylierte Ooleylether, Cetyltrimethylammoniumchloride, Stearyldimethylbenzylammoniumchlorid), Mono-, di, Triglyceride oder Gemische derselben (partielle glycerides), Polyhydrische Alkohole mit einem Molekulargewicht von bis zu 4000 Dalton (Ethylenglycol, Propylenglycol, Glycerin, Tetraethylenglycol, Polyethylenglycol 200 to 4000, Polyglycerol, Polypropylenglycol), Polyhydrische Alkoholester mit einem Molekulargewicht von bis zu 4000 in jeglichem Substitutionsgrad (wie Ethylenglycolpalmitostearat, Propylenglycoldipelargonat, Tetraglyceroldibutylester); Polyhydrische Alkoholether (wie Ethylenglycolmonoethylether, Tetrahydrofurfurylalkoholpolyethylenglycolether, Polyoxyethylenglycerine, vollständig oder teilweise hydrierte Stärkeabbauprodukte (wie Sorbitol, Maltitol, Maltitriol, Xylitol, Erythritol, Arabitoladonitol, Xylitol, Mannitol, Iditol, Galactitol, Aallitol mit einem Molekulargewicht von bis zu 1500 Dalton, Zucker (wie Glucose, Fructose, Saccharose, Agarose, Xylose), Organische Säuren und Säureanhydride (wie Ameisensäure, Milchsäure, Zitronensäure, Weinsäure, Bernsteinsäure, Maleinsäureanhydrid ), Ester organischer Säuren (wie Diacetylweinsäureester, Zitroensäureester, Methacrylsäureester, Ameisensäureester), Zuckerester (wie Sucrosefettsäureester, Polymilchsäure bis zu einem Molekulargewicht von 4000 Dalton, Polycaprolacton bis zu einem Molekulargewicht von 4000 Dalton, kurzkettige Polyvinylalkohole bis zu einem Molekulargewicht von 4000 Dalton, Harnstoff, Wachse und Wachsester (wie Honigwachs, Montanglycolester, mikrokristalline Wachse, Cetrimidwachs), Aldehyde, Ketone, Lineare und verzweigte Alkohole wie Ethanol, 1-Propanol, 2-Propanol, 2-Methyl-propanol, Propandiol, Nonanol, 1,3-Hexandiol-2-ethyl), Dimethylsulfoxid (DMSO), Dimethylformamid (DMF), Fettalkohole (wie Cetylalcohol, Stearylalkohol), Lanolinester and -ether, Propylencarbonat, N-Methylpyrrolidon, Amidee (wie Lactamid, Polyoxyethylenglycerin, Methacrylsäureamid, N-methylformamid), Amidester (wie Alkanolamide), Alkali-, Erdalkali-Salze, Kaolin; SiO₂; Erdalkali-Silikate; Bentonite, Zeolithe, oder Nanoteilchen.

Gemäss der vorliegenden Erfindung können diese Additive dem Polymer vor Beginn des Verfahrens zugemischt werden, d.h. es wird eine Zusammensetzung umfassend das Polymer und das oder die Additive eingesetzt. Erfindungsgemäss bevorzugte Zusammensetzungen umfassen 50-80 Gew.-% des Polymers und 50-20 Gew.- % des Additivs.

Es ist aber auch möglich, die Additive in Form von Lösungen gegebenenfalls in herkömmlichen Lösungsmitteln bereitzustellen und oberflächlich auf den zu verarbeitenden Polymerfilm aufzubringen.

Es ist erfindungsgemäss besonders bevorzugt, die vorstehenden Rheologiehilfsmittel nur temporär zuzusetzen, d.h. für die Dauer des Verarbeitungsprozesses, und diese dann später aus dem fertigen Formkörper wieder zu entfernen. Besonders einfach gelingt dies bei der Verwendung von Wasser als Hilfsstoff. Wasser kann durch Trocknung aus dem fertigen Formkörper wieder entfernt werden. Verfahren zur Trocknung von Formkörpern sind hinlänglich bekannt. Beispielsweise sei die Erwärmung mit Hilfe von Infrarotstrahlung genannt.

Selbstverständlich können dem Hüllgut weitere herkömmliche Zuschlagstoffe zugesetzt werden. Diese sind dem Fachmann hinlänglich bekannt und müssen hier nicht näher erläutert werden.

Die Lage des Cross-over-Punkt hängt unter anderem von der Struktur des Polymers ab. Bei Polymeren mit höherem durchschnittlichen Gewichtsmittel-Molekulargewicht ist der Cross-over-Punkt im Vergleich zu Polymeren mit geringerem durchschnittlichen Gewichtsmittel-Molekulargewicht zu niedrigeren Frequenzen hin verschoben. Der gleiche Effekt zeigt sich bei Polymeren, die aus längeren beziehungsweise verzweigteren Molekülen aufgebaut sind. Mit anderen Worten wird bei derartigen Polymeren ein geringerer Energieeintrag benötigt, um den Übergang von flüssigen zu festem Verhalten zu erreichen.

Andererseits zeigen Polymere mit breiter Molekülmassenverteilung eine ausgeprägtere Strukturviskosität als Polymere mit enger Molekülmassenverteilung.

Weitere Parameter, über welche die erfindungsgemäss wesentlichen Eigenschaften beeinflusst werden können, sind Dispersität, Kristallinität und nicht-kovalente Netzstrukturen.

Der Fachmann kann somit auf bekannte Weise durch Routinemaßnahmen ein Material erhalten, welches erfindungsgemäss verwendbar ist.

Erfindungsgemäss bevorzugt ist das thermoplastische Polymer ausgewählt aus der Gruppe bestehend aus Polyvinylalkohol, Celluloseether, Polycaprolacton, Polyamiden, Polyacrylsäure, Polyvinylpyrrolidon, Polymilchsäure oder Polyvinylalkoholacetalen, Derivaten oder Gemischen derselben. Diese Polymere zeigen entweder von sich aus bereits die gewünschten Eigenschaften oder können wie vorstehend beschrieben durch Zugabe geeigneter Hilfsstoffe so verändert werden, dass sie die erfindungsgemäss geforderten Eigenschaften aufweisen. Erfindungsgemäss besonders bevorzugt handelt es sich um ein kaltwasserlösliches Polymer wie Polyvinylalkohol. Ausdrücklich ausgenommen vom Umfang der vorliegenden Erfindung sind jedoch Materialien auf Basis von Gelatine, thermoplastischer Stärke oder von Carrageenan, d.h. den herkömmlich zur Kapselherstellung eingesetzten Materialien. Ebenfalls ausgenommen ist die in der WO 01/66082 beschriebene Zusammensetzung basierend auf PVACl.

Das erfindungsgemässe Verfahren zeichnet sich wie vorstehend erläutert dadurch aus, dass es unterhalb der Liquidus-Schmelztemperatur des entsprechenden Polymers durchgeführt wird. Um dennoch das gewünschte Verschweißen der Polymerfilme zu erzielen, muss das Material einer erhöhten mechanischen Belastung ausgesetzt werden. Dies kann gemäss der vorliegenden Erfindung beispielsweise durch Druck mittels einer Presseinrichtung oder durch erhöhte Scherkraft erreicht werden.

Erfindungsgemäss besonders bevorzugt kann das Verfahren mittels einer Rotary-Die-Vorrichtung durchgeführt werden. Rotary-Die-Vorrichtungen sind hinlänglich bekannt. Sie umfassen unter anderem Einrichtungen zum Aneinanderpressen der Formwalzen. Über diese Presseinrichtungen kann die erforderliche mechanische Belastung ausgeübt werden. Obwohl die genaue mechanische Belastung selbstverständlich von den Eigenschaften des verwendeten Polymers abhängt, wird erfindungsgemäss bevorzugt ein Druck von mehr als 10 bar auf die Formwalzen gegeben.

Die mechanische Belastung kann aber auch durch Verringerung der Breite der Formwalzenstege beeinflusst werden. Je schmaler die Formwalzenstege sind, umso mehr Druck wird auf das auf den Stegen befindliche Material ausgeübt.

Schliesslich kann die mechanische Belastung aber auch durch Anlegen eines größeren Schubmoduls an das Material erhöht werden. Erfindungsgemäss bevorzugt beträgt das Schubmodul mehr als 1 MPa.

Die Erfindung wird nachstehend anhand von nicht einschränkenden Zeichnungen und Beispielen näher erläutert.

Es zeigen:
- Fig. 1A-C: das Verschweißen von Polymerfilmen in einer Rotary-Die-Vorrichtung
- Fig. 2: den erfindungsgemässen Bereich der Strukturviskosität
- Fig. 3: den Zusammenhang zwischen Temperatur und anzulegender mechanischer Belastung
- Fig. 4: Die Viskositätskurven verschiedener Materialien

### Beispiel 1:

Untersucht wurde eine Polyvinylalkoholacetal-Verbindung vom Typ 4183/14/4+5t (Bezug über Firma Constantia). Die Verbindung basiert auf einem Polyvinylalkoholgerüst mit dispersiver Molmassenverteilung (ca. 20'000 - 80'000 g/Mol) und daran kovalent gebundener Stärke, in das ca. 15 % Glycerin und ca. 13 % Wasser eingearbeitet wurde. Eine auf Referenzklima 20 °C/50 % RH konditionierte Probe wurde in einem HochdruckKapillarviskosimeter Rheograph 2000 der Fa. Göttfert bei Schergeschwindigkeiten zwischen 0.01 mm/sec und 0.5 mm/sec beziehungsweise bei 100 °C und 120 °C vermessen. Die förderliche Steigung im Bereich 100 - 750 bar betrug 50 +/- 10 Pas/bar. Die thermische Analyse, aufgenommen auf einem Gerät DS Q 1000 der Firma TA Instruments, ergab bei einer Heizrate von 10K/min eine Liquidus-Schmelztemperatur von 190°C.

Das Material konnte unter folgenden Bedingungen problemlos in einer Rotary-Die-Vorrichtung zu Kapseln verarbeitet werden.
Verkapselungsmaschine: WBK 2000
Walzen: Typ 1925PL;
Walzenabmessungen: Länge 250 mm; Durchmesser 150 mm
Anzahl Näpfe: 7 × 16 Näpfe
Füllvolumina: 80 minims
Steghöhe: 0.7 mm
Verkapselungsparameter :
   Rotationsgeschwindigkeit: 2.5 rpm
   Segmenttemperatur: 150 °C
   Druck auf Walzen: 250 bar
Bandherstellung:
   Kuhne-EW-Extruder Typ K45-25 mit Breitschlitzdüse 300 mm;
   Banddicke: 800 µm
Kapseln: rund, transparent
Füllgut: mittelkettige Triglyceride
Abmessungen: ⌀=20.0 mm
Kapselgewicht: 4.726 g
Kapselinhalt: 3.982 g
Kapselhülle: 0.744 g
Bareiss-Härte 20 sec: 5.0 N

### Vergleichsbeispiel 2a:

Untersucht wurde eine breit polydispers eingestellte Polyvinylalkohol-Verbindung vom Typ 34818, das auf einer Mischung verschiedener, teilhydrolysierter Polyvinylalkohole (10'000 - 150'000 g/Mol; Bezug Fa. Clariant) basierte und dem 15 % Glycerin und 15 % Wasser hinzugefügt wurde. Das Material wurde auf einem Zweiwellen-Extruder Werner&Pfleiderer ZSK 25 hergestellt. Eine auf Referenzklima 20 °C/50 % RH konditionierte Probe wurde in einem Hochdruck-Kapillar-Viskosimeter Rheograph 2000 der Fa. Göttfert bei Schergeschwindigkeiten zwischen 0.01 mm/sec und 0.5 mm/sec bei verschiedenen Temperaturen vermessen. Die förderliche Steigung im Bereich von 100 bis 750 bar betrug 80 +/- 20 Pas/bar. Die thermische Analyse, aufgenommen auf einem Gerät DS Q 1000 der Firma TA Instruments, ergab bei einer Heizrate von 10K/min eine Liquidus-Schmelztemperatur von 184 °C.

Mit nachstehenden Geräteparametern konnten in einer Rotary-Die-Vorrichtung keine zufriedenstellenden Kapseln hergestellt werden:
Verkapselungsmaschine: WBK2000
Walzen: OV148033;
Abmessungen: Länge 250 mm; Durchmesser 150 mm
Anzahl Näpfe: 36 × 14
Füllvolumina: 7.5 minims
Steghöhe: 0.7 mm
Verkapselungsparameter
   Rotationsgeschwindigkeit: 1.5 rpm
   Segmenttemperatur: 150 °C
   Druck auf Walzen: 150 bar
Bandherstellung
   Kuhne-EW-Extruder Typ K45-25 mit Breitschlitzdüse 300 mm;
   Banddicke: 750 µm

Die relativ kleine Scherung bei obiger Parametrisierung genügt nicht zur Herstellung von zufriedenstellenden Weichkapseln. Die Verarbeitungstemperatur fern von der Liquidus-Schmelztemperatur gewährleistete zwar eine störungsfreie Bandzuführung in die kombinierte Füll- und Verschließeinheit; der erzeugte Schmelzfluss reicht indes nicht aus für eine Verschweißung der Kapselhälften. Demzufolge war die Siegelung schwach ausgebildet und löste sich durch geringen mechanischen Druck auf die Kapseln.

Bei Erhöhung der Verarbeitungstemperatur auf 170 °C wurde die Bandzuführung massiv beeinträchtigt; das Material wurde plastisch und die Bandzufuhr konnte nicht kontrolliert werden. Die niederviskose Schmelze verklebte die Injektionsdüsen. Die Betriebsbedingungen waren ungeeignet.

### Beispiel 2b:

Das in Vergleichsbeispiel 2a bereitgestellte Material wurde unter folgenden Bedingungen in einer Rotary-Die-Vorrichtung verkapselt:
Verkapselungsparameter :
   Rotationsgeschwindigkeit: 3.0 rpm
   Segmenttemperatur: 150 °C
   Druck auf Walzen 450 bar

Es wurde somit die Scherung durch Erhöhung des Drucks auf die rotierenden Stege sowie die Walzengeschwindigkeit erhöht. Sogar mit auf 150 °C abgesenkter Verarbeitungstemperatur konnten stabile Kapseln erhalten werden, die der Erwartung entsprachen.

Die hergestellten Kapseln lassen sich wie folgt charakterisieren:
Kapseln oval, transparent
Füllgut: mittelkettige Triglyceride MCT
Abmessungen: oval; L= 14.75 mm; ⌀=9.58 mm; L:⌀ = 1:1.5
Kapselgewicht: 0.725 g
Kapselinhalt: 0.397 g
Kapselhülle: 0.328 g
Bareiss-Härte 20 sec: 5.4 N

### Beispiel 3:

Um den Einfluss verschiedener Parameter (Molekülstruktur, Additive) auf das strukturviskose Verhalten zu zeigen, wurden verschiedene Materialien in einem Plasti-CorderPL2100 Kneter der Fa. Brabender hergestellt und die erhaltenen Proben auf ein Standardreferenzklima 20 °C/50 % RH konditioniert, bevor sie auf einem Hochdruck-Kapillarrheometer Rheograph 2000 der Fa. Göttfert bei Schergeschwindigkeiten zwischen 0.01 mm/sec und 0.5 mm/sec bei verschiedenen Temperaturen (90°C bei Bsp. 3a, 100°C bei den übrigen Beispielen) vermessen wurden.

Folgende Zusammensetzungen wurden hergestellt:
- Bsp. 3a:: Thermoplastische Stärke, enthaltend ca. 10 % Wasser und ca. 35 % sonstige Weichmacher (Kurve 1).
- Bsp. 3b:: PVACL Typ 3-4-8 basierend auf Polyvinylalkoholen verschiedener Kettenlängen, die in einem als mittel bezeichneten Molmassenbereich von ca. 14'000 - 67'000 g/Mol liegen und aufgrund ihrer Verteilung als dispers bezeichnet werden (Kurve 2).
- Bsp.3c:: Das Material gemäss Bsp. 3b, dem zusätzlich 19 % Wasser zugesetzt wurden (Kurve 3).
- Bsp. 3d:: PVACL Typ 3 aus einem kurzkettigen Polyvinylalkohol (Molmassenbereich ca. 14'000 g/Mol und hier als monodispers bezeichnet), zusätzlich enthaltend ca. 17 % Glycerin und ca. 10 % Wasser (Kurve 4).
- Bsp. 3e:: PVACL Typ 3 gemäss Bsp. 3d mit 29 % Glycerin bei unverändertem Wassergehalt (Kurve 5).
- Bsp. 3f:: PVACL Typ 8 aus einem mittelkettigen Polyvinylalkohol (Molmassenbereich ist ca. 67'000 g/Mol und hier als monodispers bezeichnet), zusätzlich enthaltend ca. 11 % Glycerin und ca. 15 % Wasser (Kurve 6).
- Bsp. 3g:: PVACL Typ 4-8 aus Polyvinylalkoholen verschiedener Kettenlängen, die in einem als mittel bezeichneten Molmassenbereich von ca. 31'000 -67'000 g/Mol liegen und aufgrund ihrer Verteilung als dispers bezeichnet werden. Das Material enthielt ca.11 % Glycerin und ca. 10 % Wasser (Kurve 7).
- Bsp.3h:: Polyvinylalkohol Typ 3-4-8-18, das aus Typen mit unterschiedlichem Polymerisationsgrad aufgebaut ist, die in einem als mittel- bis langkettig bezeichneten Molmassenbereich von ca. 14'000 -130'000 g/Mol liegen und aufgrund ihrer Verteilung hier als dispers bezeichnet werden (Kurve 8).

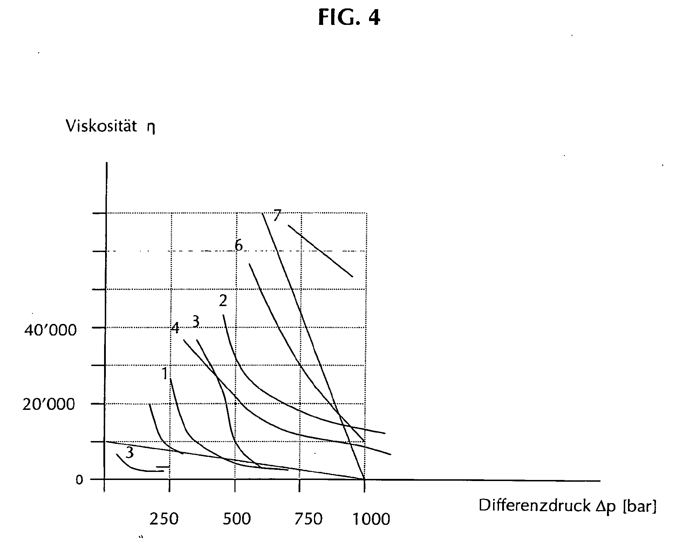

Die Viskositätskurven der vorstehenden Beispiele sind in Fig. 4 gezeigt. Wie aus der Kurve 1 hervorgeht, ist bei einem Plastomer mit heterogener Struktur enthaltend spiralig-lineare Komponenten und stark verzweigte Komponenten - wie thermoplastische Stärke - der Zusatz von vergleichsweise viel Weichmacher erforderlich, um dem Material die erfindungsgemäss geforderten strukturviskosen Eigenschaften zu verleihen.

Aus Kurve 2 geht hervor, dass ein mittelkettig-disperser Polyvinylalkohol per se nur unter erheblicher mechanischer Belastung verarbeitbar ist. Aus Kurve 3 ist jedoch ersichtlich, dass durch die Zugabe von 19 Gew.-% Wasser das Material aus dem erfindungsgemässen bereich herauswandert und nicht mehr zu Kapseln verarbeitbar ist.

Aus den Kurven 4 und 5 ist ersichtlich, dass die Materialien gemäss Bsp. 3d und e erfindungsgemäss geeignet sind. Durch Erhöhung des Glycerinanteils kommt es zu einer erheblichen Verschiebung der Viskositätskurve zu geringeren Drücken.

Aus der Kurve 6 hingegen ist ersichtlich, dass das Material gemäss Bsp. 3f verkapselbar ist, aber nur unter vergleichsweise hohen Drücken.

Aus Kurve 7 ist ersichtlich, dass das Material gemäss Bsp. 3g nicht die erforderliche Strukturviskosität aufweist, um erfindungsgemäss verkapselt zu werden.

Kurve 8 zeigt, dass das Material gemäss Bsp. 3h optimale Eigenschaften für das erfindungsgemässe Verfahren aufweist.

## Patentansprüche

1. Verfahren zur Herstellung eines Formkörpers, umfassend ein vollständig von Hüllmaterial umschlossenes Füllgut, mit den Schritten:
a) Bereitstellung von mindestens 2 Filmen eines Hüllmaterials enthaltend mindestens ein thermoplastisches Polymer, wobei das Material strukturviskos ist;
b) Verschweißen der unter a) erhaltenen Filme bei einer Temperatur unterhalb der Liquidus-Schmelztemperatur des Hüllmaterials unter erhöhter mechanischer Belastung, **dadurch gekennzeichnet, dass** das material einen Cross-over-Punkt zwischen dem Speichermodul G' und dem Verlustmodul G" in einem Frequenzspektrum von 0,001 bis 100000 s⁻¹ aufweist, gemessen in einem Bereich oberhalb der Glastemperatur und 1 bis 100°C unterhalb der Liquidus-Schmelztemperatur des Materials.

2. Verfahren nach Anspruch 1, **dadurch gekennzeichnet, dass** das thermoplastische Polymer eine Viskositätskurve bei einer Temperatur unterhalb der Liquidus-Schmelztemperatur besitzt, welche im Bereich von 100 bis 750 bar eine Steigung Δη/ΔP von mindestens -10 Pas/bar und von maximal -150 Pas/bar aufweist.

3. Verfahren nach Anspruch 1, **dadurch gekennzeichnet, dass** das thermoplastische Polymere eine Viskositätskurve bei einer Temperatur unterhalb der Liquidus-Schmelztemperatur besitzt, welche im Bereich von 100 bis 750 bar eine Steigung Δη/ΔP von mindestens -30 Pas/bar und von maximal -100 Pas/bar aufweist.

4. Verfahren nach Anspruch 1 bis 3, **dadurch gekennzeichnet, dass** das Material einen Cross-over-Punkt zwischen dem Speichermodul G' und dem Verlustmodul G" in einem Frequenzspektrum von 0,001 bis 100000 s⁻¹ aufweist, welcher in einem Bereich oberhalb von der Glastemperatur und 1 bis 70°C, vorzugsweise 1 bis 50°C unterhalb der Liquidus-Schmelztemperatur des Materials liegt.

5. Verfahren nach Anspruch 1 bis 4, **dadurch gekennzeichnet, dass** das Hüllmaterial eine Mischung umfassend 50-80 Gew.-% eines thermoplastischen Polymers und 50-20 Gew.-% eines Additivs ist.

6. Verfahren nach Anspruch 5, **dadurch gekennzeichnet, dass** das Additiv ausgewählt ist aus der Gruppe bestehend aus Rheologiehilfsmitteln, Weichmachern, oder Gemischen derselben.

7. Verfahren nach Anspruch 5 oder 6, **dadurch gekennzeichnet, dass** das Additiv ausgewählt ist aus der Gruppe bestehend aus Polyethylenglycol, Polyvinylalkohol, Polyvinylacetat, Polyvinylmethylether, Polyacrylsäure und Salzen davon, Polyvinylacrylsäure, Polyacrylamide, Ethylenoxid-Polymeren, Polyessigsäure, Alkali- und Erdalkalimetal-Fettsäuresalze wie Magnesiumstearat, Aluminiumstearat, Lecithin, Emulgatoren, anionische, kationische und neutrale Tenside (wie Sorbitanester (Span), ethoxylierte Sorbitanfettsäureester, (Polysorbate), Glycerolester, Polyglycerolester, Fettalkoholethoxylate, Fettsäureester von Polyglycol, Glycerolpolyethylenglycolfettsäureester, Fettsäureethoxylat, Fettsäureester, Nonylphenolethoxylate, ethoxylierte synthetische Fettalkohole, alkoxylierte synthetische Fettsäurealcohole, natrium-N-methyl-N-oleyltaurat, phosphorylierte Ooleylether, Cetyltrimethylammoniumchloride, Stearyldimethylbenzylammoniumchlorid), Mono-, di, Triglyceride oder Gemische derselben (partielle glycerides), Polyhydrische Alkohole mit einem Molekulargewicht von bis zu 4000 Dalton (Ethylenglycol, Propylenglycol, Glycerin, Tetraethylenglycol, Polyethylenglycol 200 to 4000, Polyglycerol, Polypropylenglycol), Polyhydrische Alkoholester mit einem Molekulargewicht von bis zu 4000 in jeglichem Substitutionsgrad (wie Ethylenglycolpalmitostearat, Propylenglycoldipelargonat, Tetraglyceroldibutylester); Polyhydrische Alkoholether (wie Ethylenglycolmonoethylether, Tetrahydrofurfurylalkoholpolyethylenglycolether, Polyoxyethylenglycerine, vollständig oder teilweise hydrierte Stärkeabbauprodukte (wie Sorbitol, Maltitol, Maltitriol, Xylitol, Erythritol, Arabitoladonitol, Xylitol, Mannitol, Iditol, Galactitol, Aallitol mit einem Molekulargewicht von bis zu 1500 Dalton, Zucker (wie Glucose, Fructose, Saccharose, Agarose, Xylose), Organische Säuren und Säureanhydride (wie Ameisensäure, Milchsäure, Zitronensäure, Weinsäure, Bernsteinsäure, Maleinsäureanhydrid ), Ester organischer Säuren (wie Diacetylweinsäureester, Zitroensäureester, Methacrylsäureester, Ameisensäureester), Zuckerester (wie Sucrosefettsäureester, Polymilchsäure bis zu einem Molekulargewicht von 4000 Dalton, Polycaprolacton bis zu einem Molekulargewicht von 4000 Dalton, kurzkettige Polyvinylalkohole bis zu einem Molekulargewicht von 4000 Dalton, Harnstoff, Wachse und Wachsester (wie Honigwachs, Montanglycolester, mikrokristalline Wachse, Cetrimidwachs), Aldehyde, Ketone, Lineare und verzweigte Alkohole wie Ethanol, 1-Propanol, 2-Propanol, 2-Methyl-propanol, Propandiol, Nonanol, 1,3-Hexandiol-2-ethyl), Dimethylsulfoxid (DMSO), Dimethylformamid (DMF), Fettalkohole (wie Cetylalcohol, Stearylalkohol), Lanolinester and -ether, Propylencarbonat, N-Methylpyrrolidon, Amiden (wie Lactamid, Polyoxyethylenglycerin, Methacrylsäureamid, N-methylformamid), Amidester (wie Alkanolamide), Alkali-, Erdalkali-Salze, Kaolin; SiO₂; Erdalkali-Silikate; Bentonite, Zeolithe, oder Nanoteilchen, oder Gemischen derselben.

8. Verfahren nach Anspruch 1 bis 7, **dadurch gekennzeichnet, dass** das thermoplastische Polymer ausgewählt ist aus der Gruppe bestehend aus Polyvinylalkohol, Celluloseether, Polycaprolacton, Polyamiden, Polymilchsäure, Polyvinylpyrrolidon, Polyacrylsäure oder Polyvinylalkoholacetalen, oder Gemischen derselben.

9. Verfahren nach Anspruch 1 bis 8, **dadurch gekennzeichnet, dass** es sich um ein kaltwasserlösliches Polymer handelt.

10. Verfahren nach Anspruch 1 bis 9, **dadurch gekennzeichnet, dass** es sich um ein Rotary-Die-Verfahren handelt.

11. Verfahren nach Anspruch 1 bis 10, **dadurch gekennzeichnet, dass** das Additiv nach Durchführung des Verfahrens ganz oder teilweise wieder entfernt wird.

12. Verfahren nach Anspruch 11, **dadurch gekennzeichnet, dass** das Additiv Wasser ist und durch Trocknung entfernt wird.

13. Verfahren nach Anspruch 1 bis 12, **dadurch gekennzeichnet, dass** ein Druck von mehr als 10 bar auf die Formwalzen gegeben wird.

14. Verfahren nach Anspruch 1 bis 13, **dadurch gekennzeichnet, dass** ein Schubmodul von mehr als 1 MPa angelegt wird.

15. Zusammensetzung zur Herstellung von Formkörpern, insbesondere von Weichkapseln, worin das Material mindestens ein thermoplastisches Polymer enthält, wobei das Material strukturviskos ist und einen Cross-over-Punkt zwischen dem Speichermodul G' und dem Verlustmodul G" in einem Frequenzspektrum von 0,001 bis 100000 s⁻¹ aufweist, welcher in einem Bereich oberhalb von der Glastemperatur liegt, **dadurch gekennzeichnet, dass** der Cross-over-Punkt 1 bis 100°C unterhalb der Liquidus-Schmelztemperatur des Materials liegt.

16. Formkörper, vorzugsweise Weichkapsel, mit stumpfer Schweissnaht, wobei die Hülle des Formkörpers mindestens ein thermoplastisches Polymer enthält, wobei das Material strukturviskos ist und einen Cross-over-Punkt zwischen dem Speichermodul G' und dem Verlustmodul G" in einem Frequenzspektrum von 0,001 bis 100000 s⁻¹ aufweist, welcher in einem Bereich von 1 bis 100°C unterhalb der Liquidus-Schmelztemperatur des Materials liegt, ausgenommen Materialien auf Basis von Gelatine, thermoplastischer Stärke oder von Carrageenan.

17. Verwendung eines Materials enthaltend mindestens ein thermoplastisches Polymer, wobei das Material strukturviskos ist und einen Cross-over-Punkt zwischen dem Speichermodul G' und dem Verlustmodul G" in einem Frequenzspektrum von 0,001 bis 100000 s⁻¹ aufweist, welcher in einem Bereich von 1 bis 100°C unterhalb der Liquidus-Schmelztemperatur des Materials liegt, zur Herstellung von Weichkapseln in einem Verfahren, bei welchem das Verschweißen von aus diesem Material erhaltenen Filmen bei einer Temperatur unterhalb der Liquidus-Schmelztemperatur des Materials unter erhöhter mechanischer Belastung erfolgt, vorzugsweise in einem Rotary-Die-Verfahren.

## Claims

1. Process for producing a moulded body, comprising a fill material completely enclosed by a shell material, with the following steps:
a) provision of at least 2 films of a shell material comprising at least one thermoplastic polymer, where the material is shear-thinning;
b) welding of the films obtained in a) at a temperature below the liquidus melting point of the shell material under increased mechanical load, **characterized in that** the material has a cross-over point between the storage modulus G' and the loss modulus G" in a frequency spectrum from 0.001 to 100 000 s⁻¹, measured in a range above the glass transition temperature and from 1 to 100°C below the liquidus melting point of the material.

2. Process according to Claim 1, **characterized in that** the viscosity curve of the thermoplastic polymer at a temperature below the liquidus melting point has a Δη/ΔP gradient of at least -10 Pas/bar and of at most -150 Pas/bar in the range from 100 to 750 bar.

3. Process according to Claim 1, **characterized in that** the viscosity curve of the thermoplastic polymer at a temperature below the liquidus melting point has a Δη/ΔP gradient of at least -30 Pas/bar and of at most -100 Pas/bar in the range from 100 to 750 bar.

4. Process according to any of Claims 1 to 3, **characterized in that** the material has a cross-over point between the storage modulus G' and the loss modulus G" in a frequency spectrum from 0.001 to 100 000 s⁻¹, wherein said cross-over point lies within a range above the glass transition temperature and from 1 to 70°C, preferably from 1 to 50°C, below the liquidus melting point of the material.

5. Process according to any of Claims 1 to 4, **characterized in that** the shell material is a mixture comprising from 50 to 80% by weight of a thermoplastic polymer and from 50 to 20% by weight of an additive.

6. Process according to Claim 5, **characterized in that** the additive is selected from the group consisting of rheology aids, plasticizers, and mixtures of the same.

7. Process according to Claim 5 or 6, **characterized in that** the additive is selected from the group consisting of polyethylene glycol, polyvinyl alcohol, polyvinyl acetate, polyvinyl methyl ether, polyacrylic acid and salts thereof, polyvinylacrylic acid, polyacrylamide, ethylene oxide polymers, polyacetic acid, fatty acid salts of alkali metals and of alkaline earth metals, e.g. magnesium stearate, aluminium stearate, lecithin, emulsifiers, anionic, cationic and neutral surfactants (e.g. sorbitan ester (Span), ethoxylated sorbitan fatty acid esters, (polysorbates), glycerol esters, polyglycerol esters, fatty alcohol ethoxylates, fatty acid esters of polyglycol, glycerol polyethylene glycol fatty acid esters, fatty acid ethoxylate, fatty acid ester, nonylphenol ethoxylates, ethoxylated synthetic fatty alcohols, alkoxylated synthetic fatty acid alcohols, sodium N-methyl-N-oleyltaurate, phosphorylated oleyl ether, cetyltrimethylammonium chlorides), stearyldimethylbenzylammonium chloride, mono-, di-, or triglycerides or mixtures of the same (partial glycerides), polyhydric alcohols with a molecular weight of up to 4000 daltons (ethylene glycol, propylene glycol, glycerol, tetraethylene glycol, polyethylene glycol 200 to 4000, polyglycerol, polypropylene glycol), polyhydric alcohol esters with a molecular weight of up to 4000 with any degree of substitution (e.g. ethylene glycol palmitostearate, propylene glycol dipelargonate, tetraglycerol dibutyl ester); polyhydric alcohol ethers (e.g. ethylene glycol monoethyl ether, tetrahydrofurfuryl alcohol polyethylene glycol ether, polyoxyethylene glycerols, completely or partially hydrogenated starch degradation products (e.g. sorbitol, maltitol, maltitriol, xylitol, erythritol, Arabitoladonitol, xylitol, mannitol, iditol, galactitol, allitol with a molecular weight of up to 1500 daltons, sugars (e.g. glucose, fructose, sucrose, agarose, xylose), organic acids and anhydrides (e.g. formic acid, lactic acid, citric acid, tartaric acid, succinic acid, maleic anhydride), esters of organic acids (e.g. diacetyltartaric ester, citric ester, methacrylic ester, formic ester), sugar esters (e.g. sucrose fatty acid ester, polylactic acid up to a molecular weight of 4000 daltons, polycaprolactone up to a molecular weight of 4000 daltons, short-chain polyvinyl alcohols up to a molecular weight of 4000 daltons, urea, waxes and wax esters (e.g. beeswax, montan glycol ester, microcrystalline wax, cetrimide wax), aldehydes, ketones, linear and branched alcohols, e.g. ethanol, 1-propanol, 2-propanol, 2-methylpropanol, propanediol, nonanol, 2-ethyl-1,3-hexanediol, dimethyl sulphoxide (DMSO), dimethylformamide (DMF), fatty alcohols (e.g. cetyl alcohol, stearyl alcohol), lanolin ester and lanolin ether, propylene carbonate, N-methylpyrrolidone, amides (e.g. lactamide, polyoxyethylene glycerol, methacrylamide, N-methylformamide), amide esters (e.g. alkanolamides), alkali metal salts, alkaline earth metal salts, kaolin; SiO₂; alkaline earth metal silicates; bentonites, zeolites, or nanoparticles, or mixtures of the same.

8. Process according to any of Claims 1 to 7, **characterized in that** the thermoplastic polymer is selected from the group consisting of polyvinyl alcohol, cellulose ether, polycaprolactone, polyamides, polylactic acid, polyvinylpyrrolidone, polyacrylic acid or polyvinyl alcohol acetals, and mixtures of the same.

9. Process according to any of Claims 1 to 8, **characterized in that** the polymer is a polymer soluble in cold water.

10. Process according to any of Claims 1 to 9, **characterized in that** the process is a rotary-die process.

11. Process according to any of Claims 1 to 10, **characterized in that** the additive is completely or to some extent removed again after conduct of the process.

12. Process according to Claim 11, **characterized in that** the additive is water and is removed by drying.

13. Process according to any of Claims 1 to 12, **characterized in that** a pressure of more than 10 bar is applied to the forming rolls.

14. Process according to any of Claims 1 to 13, **characterized in that** a shear modulus of more than 1 MPa is applied.

15. Composition for producing moulded bodies, in particular soft capsules, wherein the material contains at least one thermoplastic polymer, wherein the material is shear-thinning and has a cross-over point between the storage modulus G' and the loss modulus G" in a frequency spectrum from 0.001 to 100 000 s⁻¹, wherein said cross-over point lies in a range above the glass transition temperature, **characterized in that** the cross-over point lies from 1 to 100°C below the liquidus melting point of the material.

16. Moulded body, preferably soft capsule, with butt weld, wherein the shell of the moulded body contains at least one thermoplastic polymer, wherein the material is shear-thinning and has a cross-over point between the storage modulus G' and the loss modulus G" in a frequency spectrum from 0.001 to 100 000 s⁻¹, wherein said cross-over point lies in a range from 1 to 100°C below the liquidus melting point of the material, with the exception of materials based on gelatin, on thermoplastic starch or on carrageenan.

17. Use of a material comprising at least one thermoplastic polymer, wherein the material is shear-thinning and has a cross-over point between the storage modulus G' and the loss modulus G" in a frequency spectrum from 0.001 to 100 000 s⁻¹, wherein said cross-over point lies in a range from 1 to 100°C below the liquidus melting point of the material, for producing soft capsules in a process in which the welding of films obtained from said material takes place at a temperature below the liquidus melting point of the material under increased mechanical load, preferably in a rotary-die process.

## Revendications

1. Procédé de production d'un corps façonné, comprenant un produit de remplissage complètement entouré de matériau d'enrobage, présentant les étapes de
a) préparation d'au moins 2 films d'un matériau d'enrobage, contenant au moins un polymère thermoplastique, où le matériau présente une viscosité de structure ;
b) soudage des films obtenus sous a) à une température inférieure à la température de fusion du liquidus du matériau d'enrobage sous une sollicitation mécanique augmentée,
**caractérisé**
**en ce que** le matériau présente un point de croisement entre le module d'accumulation G' et le module de perte G" dans un spectre de fréquences de 0,001 à 100 000 s⁻¹, mesuré dans une plage au-dessus de la température de transition vitreuse et de 1 à 100°C sous la température de fusion du liquidus du matériau.

2. Procédé selon la revendication 1, **caractérisé en ce que** le polymère thermoplastique présente une courbe de viscosité à une température sous la température de fusion du liquidus, qui présente, dans la plage de 100 à 750 bars, une augmentation Δη/ΔP d'au moins -10 Pa.s/bar et d'au maximum -150 Pa.s/bar.

3. Procédé selon la revendication 1, **caractérisé en ce que** le polymère thermoplastique présente une courbe de viscosité à une température sous la température de fusion du liquidus, qui présente, dans la plage de 100 à 750 bars, une augmentation Δη/ΔP d'au moins -30 Pa.s/bar et d'au maximum -100 Pa.s/bar.

4. Procédé selon les revendications 1 à 3, **caractérisé en ce que** le matériau présente un point de croisement entre le module d'accumulation G' et le module de perte G" dans un spectre de fréquences de 0,001 à 100 000 s⁻¹, qui se situe dans une plage au-dessus de la température de transition vitreuse et de 1 à 70°C, de préférence 1 à 50°C sous la température de fusion du liquidus du matériau.

5. Procédé selon les revendications 1 à 4, **caractérisé en ce que** le matériau d'enrobage est un mélange comprenant 50-80% en poids d'un polymère thermoplastique et 50-20% en poids d'un additif.

6. Procédé selon la revendication 5, **caractérisé en ce que** l'additif est choisi dans le groupe constitué par les adjuvants de rhéologie, les plastifiants ou leurs mélanges.

7. Procédé selon la revendication 5 ou 6, **caractérisé en ce que** l'additif est choisi dans le groupe constitué par le polyéthylèneglycol, le poly(alcool vinylique), le poly(acétate de vinyle), le polyvinylméthyléther, le poly(acide acrylique) et ses sels, le poly(acide vinylacrylique), les polyacrylamides, les polymères d'oxyde d'éthylène, le poly(acide acétique), les sels de métal alcalin et alcalino-terreux d'acides gras, tels que le stéarate de magnésium, le stéarate d'aluminium, la lécithine, les émulsifiants, les agents tensioactifs anioniques, cationiques et neutres (tels que les esters de sorbitane (Span), les esters éthoxylés d'acides gras de sorbitane, (polysorbates), les esters de glycérol, les esters de polyglycérol, les éthoxylates d'alcools gras, les esters d'acides gras de polyglycol, les esters d'acides gras de glycérolpolyéthylèneglycol, les éthoxylates d'acides gras, les esters d'acides gras, les éthoxylates de nonylphénol, les alcools gras synthétiques éthoxylés, les alcools d'acides gras synthétiques alcoxylés, le N-méthyl-N-oléyltaurate de sodium, les oléyléthers phosphorylés, le chlorure de cétyltriméthylammonium, le chlorure de stéaryldiméthylbenzylammonium, les monoglycérides, diglycérides, triglycérides ou mélanges de ceux-ci (glycérides partiels), les alcools polyhydriques présentant un poids moléculaire allant jusqu'à 4000 Daltons (éthylèneglycol, propylèneglycol, glycérol, tétraéthylèneglycol, polyéthylèneglycol 200 à 4000, polyglycérol, polypropylèneglycol), les esters d'alcools polyhydriques présentant un poids moléculaire allant jusqu'à 4000 dans chaque degré de substitution (tels que le palmitostéarate d'éthylèneglycol, le dipélargonate de propylèneglycol, l'ester dibutylique de tétraglycérol) ; les alcooléthers polyhydriques (tels que l'éthylèneglycolmonoéthyléther, le polyéthylèneglycoléther de l'alcool tétrahydrofurfurylique, les polyoxyéthylèneglycérols), les produits de dégradation de l'amidon totalement ou partiellement hydrogénés (tels que le sorbitol, le maltitol, le maltitriol, le xylitol, l'érythritol, l'arabitoladonitol, le xylitol, le mannitol, l'iditol, le galactitol, l'allitol présentant un poids moléculaire allant jusqu'à 1500 Daltons), les sucres (tels que le glucose, le fructose, le saccharose, l'agarose, le xylose), les acides et anhydrides d'acides organiques (tels que l'acide formique, lactique, citrique, tartrique, succinique, l'anhydride de l'acide maléique), les esters d'acides organiques (tels que les esters de l'acide diacétyltartrique, les esters de l'acide citrique, les esters de l'acide méthacrylique, les esters de l'acide formique), les esters de sucres (tels que les esters d'acides gras de saccharose), le poly(acide lactique) jusqu'à un poids moléculaire de 4000 Daltons, la polycaprolactone jusqu'à un poids moléculaire de 4000 Daltons, les poly(alcools vinyliques) à courte chaîne, jusqu'à un poids moléculaire de 4000 Daltons, l'urée, les cires et esters de cire (tels que la cire de miel, les esters glycoliques de montane, les cires microcristallines, la cire de cétrimide), les aldéhydes, les cétones, les alcools linéaires et ramifiés, tels que l'éthanol, le 1-propanol, le 2-propanol, le 2-méthylpropanol, le propanediol, le nonanol, le 1,3-hexanediol-2-éthyle), le diméthylsulfoxyde (DMSO), le diméthylformamide (DMF), les alcools gras (tels que l'alcool cétylique, l'alcool stéarylique), les esters et les éthers de lanoline, le propylènecarbonate, la N-méthylpyrrolidone, les amides (tels que le lactamide, le polyoxyéthylèneglycérol, l'amide de l'acide méthacrylique, le N-méthylformamide), les esters d'amide (tels que les alcanolamides), les sels de métal alcalin, les sels de métal alcalino-terreux, le kaolin ; le SiO₂ ; les silicates de métal alcalino-terreux ; les bentonites, les zéolithes, ou les nanoparticules ou leurs mélanges.

8. Procédé selon les revendications 1 à 7, **caractérisé en ce que** le polymère thermoplastique est choisi dans le groupe constitué par les poly(alcools vinyliques), les éthers de cellulose, la polycaprolactone, les polyamides, le poly(acide lactique), la polyvinylpyrrolidone, le poly(acide acrylique), ou les acétals de poly(alcools vinyliques), ou leurs mélanges.

9. Procédé selon les revendications 1 à 8, **caractérisé en ce qu'**il s'agit d'un polymère soluble dans l'eau froide.

10. Procédé selon les revendications 1 à 9, **caractérisé en ce qu'**il s'agit d'un procédé à matrice rotative.

11. Procédé selon les revendications 1 à 10, **caractérisé en ce que** l'additif est de nouveau éliminé totalement ou partiellement après la réalisation du procédé.

12. Procédé selon les revendications 11, **caractérisé en ce que** l'additif est de l'eau et est éliminé par séchage.

13. Procédé selon les revendications 1 à 12, **caractérisé en ce qu'**on applique une pression de plus de 10 bars sur les cylindres de façonnage.

14. Procédé selon les revendications 1 à 13, **caractérisé en ce qu'**on applique un module de cisaillement supérieur à 1 MPa.

15. Composition pour la production de corps façonnés, en particulier de capsules souples, où le matériau contient au moins un polymère thermoplastique, le matériau présentant une viscosité de structure et un point de croisement entre le module d'accumulation G' et le module de perte G" dans un spectre de fréquences de 0,001 à 100 000 s⁻¹, qui se situe dans une plage au-dessus de la température de transition vitreuse, **caractérisée en ce que** le point de croisement se situe 1 à 100°C sous la température de fusion du liquidus du matériau.

16. Corps façonné, de préférence capsule molle, avec un joint de soudure émoussé, l'enrobage du corps façonné contenant au moins un polymère thermoplastique, le matériau présentant une viscosité de structure et un point de croisement entre le module d'accumulation G' et le module de perte G" dans un spectre de fréquences de 0,001 à 100 000 s⁻¹, qui se situe dans une plage de 1 à 100°C sous la température de fusion du liquidus du matériau, à l'exception de matériaux à base de gélatine, d'amidon thermoplastique ou de carraghénane.

17. Utilisation d'un matériau contenant au moins un polymère thermoplastique, le matériau présentant une viscosité de structure et un point de croisement entre le module d'accumulation G' et le module de perte G" dans un spectre de fréquences de 0,001 à 100 000 s⁻¹, qui se situe dans une plage de 1 à 100°C sous la température de fusion du liquidus du matériau, pour la production de capsules molles dans un procédé dans lequel le soudage des films obtenus à partir de ce matériau est réalisé à une température sous la température de fusion du liquidus du matériau sous une sollicitation mécanique augmentée, de préférence dans un procédé à matrice rotative.
